## Europäisches Patentamt
## European Patent Office
## Office européen des brevets

(11) Numéro de publication: **0 034 976**
**A1**

# (12) DEMANDE DE BREVET EUROPEEN

(21) Numéro de dépôt: **81400232.5**

(22) Date de dépôt: **13.02.81**

(51) Int. Cl.³: **G 06 F 3/037**

(30) Priorité: **21.02.80 FR 8004122**

(43) Date de publication de la demande:
**02.09.81 Bulletin 81/35**

(84) Etats contractants désignés:
**CH DE GB LI NL SE**

(71) Demandeur: **Etablissement Public de Diffusion dit "Télédiffusion de France"**
**21 -27 rue Barbès**
**F-92120 Montrouge(FR)**

(71) Demandeur: **Dagnelie, Jean-Paul**
**7, Quai de la Prévalaye**
**F-35000 Rennes(FR)**

(71) Demandeur: **Veilex, Robert**
**Domaine des Bois de Jarcy**
**F-91480 Varennes Jarcy Quincy-sous-Sénart(FR)**

(72) Inventeur: **Dagnelie, Jean-Paul**
**58, Boulevard des Américains**
**F-44300 Nantes(FR)**

(72) Inventeur: **Veilex, Robert**
**Domaine des Bois de Jarcy**
**F-91480 Varennes Jarcy Quincy-s.-Sénart(FR)**

(72) Inventeur: **Rahuel, Jean-Claude**
**12, Square de Tanouarn**
**F-35000 Rennes(FR)**

(74) Mandataire: **Le Guen, Louis François**
**13, rue Emile Bara BP 91**
**F-35800 Dinard(FR)**

(54) **Appareils de téléécriture et d'affichage sur surface commune.**

(57) L'appareil se compose d'une tablette graphique à nappes de fils et d'un dispositif d'affichage, notamment à tube cathodique, recevant les signaux transmis par la tablette graphique. Les fils (5, 6) de la tablette sont parcourus par des courants alternatifs. La plaque (4) non conductrice de la tablette est transparente et les nappes de fils (5, 6) sont constituées de conducteurs électriques transparents ou de fils conducteurs fins, ce qui les rend pratiquement invisibles. La tablette est appliquée sur l'écran du dispositif d'affichage.

Entre l'écran du tube cathodique et la face inférieure de la tablette graphique, est prévue une couche (8) transparente conductrice et non magnétique. Dans une variante, le courant électrique parcourant les nappes de fils (5, 6) est un courant à haute fréquence. Le stylet de la tablette graphique peut être une tige métallique gainée par un matériau isolant.

# FIG.3

Appareils de téléécriture et d'affichage sur surface commune

La présente invention concerne des appareils de téléécriture et d'affichage sur surface commune se composant de tablettes graphiques à nappes de fils et de dispositifs d'affichage, tels que des tubes cathodiques, recevant les signaux transmis par les tablettes graphiques.

Une technique connue d'écriture directe sur écran est celle du photostyle (en anglais: light-pen). Elle est fondée sur l'utilisation d'un tube cathodique et est donc inutilisable dans le cas d'un écran plat de type matriciel (cristaux liquides, plasmas, poudres électroluminescente, etc.). La technique des photostyles est fondée sur la détection synchrone par une photodiode du faisceau d'électrons balayant le tube cathodique. Par construction, le système ne permet d'acquérir qu'une position du photostyle toutes les demi-images, ce qui empêche toute détection fine d'un mouvement rapide et donc impose une vitesse d'écriture très lente. Par exemple, le système ne peut servir à l'acquisition fine d'une signature.

Les tablettes graphiques à fils sont connues. Une tablette graphique à fils comprend une plaque non conductrice comportant deux nappes de fils perpendiculaires entre elles, les fils étant tous isolés les uns des autres. Les fils d'une nappe sont séquentiellement parcourus par un courant électrique, puis les fils de l'autre nappe, et ainsi de suite. Une sorte de stylo ou crayon à bille permet d'écrire ou de dessiner sur une feuille de papier recouvrant la plaque non conductrice. Le stylo comporte des moyens sensibles au champ électrique créé par les courants passant dans les fils et délivre un signal de sortie à partir duquel les coordonnées de l'extrémité du stylo sont déduites. Le signal ainsi recueilli sert ensuite à afficher par exemple sur un écran de tube cathodique l'écriture ou le dessin exécutés sur la tablette graphique. La tablette peut ainsi servir à acquérir en temps réel un dessin ou une écriture, à numériser le signal et à faire parvenir les informations à un appareil de visualisation affichant le dessin ou l'écriture sur un écran, par exemple un écran de tube cathodique.

Ce système de téléécriture présente l'inconvénient majeur d'avoir une surface d'écriture dissociée de la surface d'affichage ou de visualisation.

On connaît également des grilles de conducteurs plus ou moins transparents montées sur des feuilles flexibles transparentes et qui sont appliquées sur des écrans d'affichage qui affichent des dessins prédéterminés. Ces grilles sont associées à des moyens permettant de sélecter un point de croisement parmi les points de croisement de la grille afin de commander le composant commandable qui se trouve, dans le dessin affiché, sous le point de croisement sélecté. Des grilles de ce type sont décrites dans le brevet luxembourgeois 65 252, les brevets U.S. 3 758 718 et 4 066 855, ainsi que dans l'article de K. Crook intitulé "CRT touch panels provide maximum flexibility in computer interaction" et paru dans la revue technique CONTROL ENGINEERING, vol 23, N° 7, pages 33 et 34, juillet 1976, ou encore dans l'article de P.J. Kennedy intitulé "Computer interface device" et paru dans la revue IBMTECHNICAL DISCLOSURE BULLETIN, vol. 22, N° 8B, pages 3542 et 3543, janvier 1980. En pratique, ces grilles ne sont pas des tablettes graphiques car elles ne permettent que de sélecter un point de croisement, alors qu'une tablette graphique doit permettre de dessiner en temps réel au moyen du dispositif d'affichage.

Un objet de l'invention consiste à prévoir un appareil de téléécriture et d'affichage sur surface commune comprenant une tablette graphique à fils qui soit transparente et non nécessairement plane afin de pouvoir faire coïncider la surface d'écriture avec la surface d'un écran de tube cathodique d'affichage recevant les signaux transmis par la tablette.

Des expériences ont montré qu'il existait des couplages entre le tube écran et le stylo de la tablette. Pour obvier à cet inconvénient, qui rend les dessins inutilisables, il convient, dans l'état actuel de la technique, d'éloigner écran et stylo de l'ordre de un mètre. Il faut noter qu'avec les grilles de sélection de points de croisement, on n'a évidemment pas ce type d'interférence.

Un autre objet de la présente invention consiste à prévoir des moyens permettant de superposer une tablette graphique transparente à fils sur un écran de tube cathodique.

Suivant une caractéristique de l'invention, il est prévu un appareil de téléécriture et d'affichage, tel que défini ci-dessus, comprenant une tablette graphique à fils parcourus par des courants alternatifs, dont la plaque non conductrice est transparente et dont les nappes de fils perpendiculaires entre elles sont constituées de conducteurs électriques transparents ou de fils conducteurs fins, ce qui les rend pratiquement invisibles, la tablette étant appliquée sur l'écran d'affichage à tube cathodique et associée à des moyens sensibles au champ électrique créé par les courants alternatifs pour en déduire des signaux d'affichage qui sont, entre autres, transmis audit tube d'affichage, avec, entre l'écran du tube cathodique et la face inférieure de la tablette graphique, une couche transparente conductrice et non magnétique.

Suivant une autre caractéristique, le courant électrique parcourant les nappes de fils est un courant à haute fréquence, par exemple de l'ordre de 10 MHz.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels:

la Fig. 1 est une vue schématique d'un appareil d'écriture et d'affichage suivant l'invention,

la Fig. 2 est une vue en coupe d'une tablette transparente suivant l'invention, appliquée sur un écran de tube cathodique,

la Fig. 3 est une vue en coupe d'une variante de la tablette de la Fig. 2, appliquée sur un écran de tube cathodique, et

la Fig. 4 est une vue d'une tablette entourée d'un cadre.

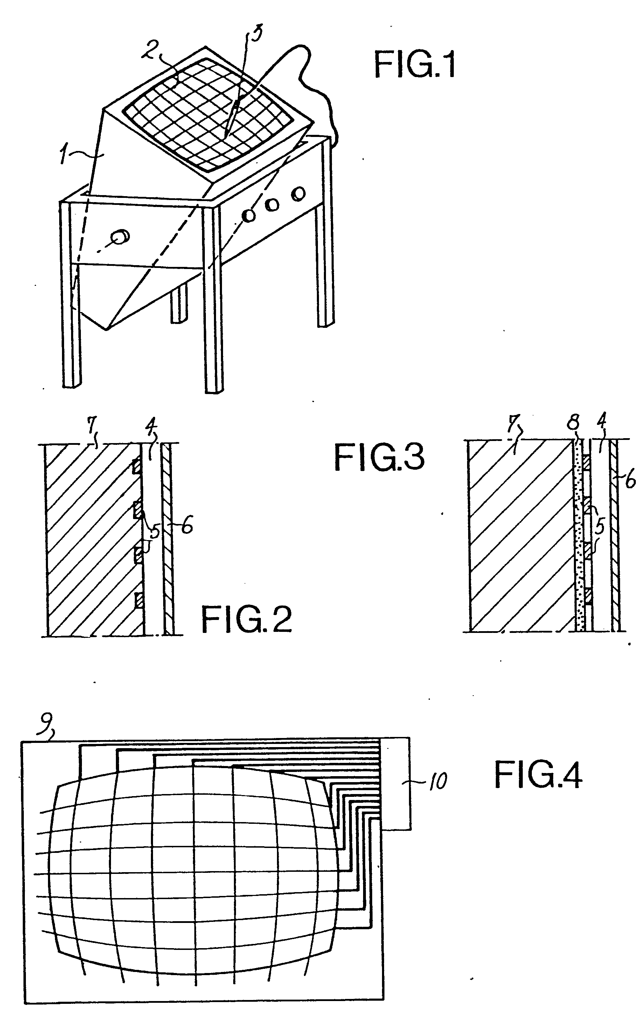

A la Fig. 1, on a représenté un appareil à tube cathodique 1 fonctionnant comme un récepteur de télévision, sur l'écran duquel est appliqué une tablette graphique transparente 2. Le stylo 3 associé à la tablette est relié à un circuit émission, lui-même relié à un circuit réception qui alimente le récepteur de l'appareil 1.

Il faut noter que, dans les conditions d'utilisation de l'invention, l'usage d'un stylo laissant une trace écrite n'est pas obligatoire. Un style, au sens original du terme, suffit. Ce style peut même être une simple tige métallique gainée par un isolant et ayant un bout arrondi.

Sur l'écran du tube cathodique, s'affiche le dessin exécuté par le stylot 3 sur la tablette 2. La transmission du stylo à l'appareil étant instantanée, l'opérateur a l'impression d'écrire directement sur l'écran du tube, visible à travers la tablette. C'est pourquoi on peut simplement utiliser, comme style, une tige métallique gainée par un isolant. Par ailleurs, si le récepteur de l'appareil est également susceptible de recevoir des signaux provenant d'autres tablettes, l'opérateur peut directement participer à une conférence.

Sur la coupe de la Fig. 2, on a montré un voile 4 avec, d'un côté, des conducteurs horizontaux 5 et, de l'autre côté, des conducteurs verticaux, tels que 6. Le matériau du voile 4 est transparent, isolant, mais perméable au rayonnement électromagnétique. Parmi les matériaux susceptibles d'être utilisés pour constituer le voile 4, on peut citer le verre.

Les conducteurs 5 et 6 sont des bandes conductrices, de résistance négligeable et transparentes.

Pour obtenir ces bandes conductrices, plusieurs techniques sont connues, telles que, par exemple:

- une pulvérisation cathodique d'une couche conductrice transparente d'un mélange d'oxydes d'étain et d'indium (ou en anglais: Indium Tin Oxide - ITO),

- une utilisation du procédé PYROSOL, mis au point au Commissariat à l'Energie Atomique, appliqué aux revêtements transparents conducteurs,

- une fabrication de films conducteurs et transparents d'oxyde d'indium, suivant une technique décrite dans la revue technique américaine "Journal of Vacuum Science Technology", Vol. 12, N° 1, janvier 1975,

- des dépôts sur verre Triplex de $SnO_2$, dopé au fluor, suivant une technique développée par la Société Saint-Gobain,

- des dépôts d'$In_2O_2$ sur du verre, suivant une technique développée par la Société Protis.

Il est également possible de remplacer les dépôts conducteurs par des fils, par exemple métalliques, de résistance négligeable et très fins, par exemple de quelques centièmes de mm. Ces fils peuvent être soit collés sur un substrat transparent, soit noyés dans celui-ci. La finesse de ces fils les rend quasiment invisibles, d'où la transparence de la tablette à fils.

Il est clair qu'à partir du moment où l'on sait déposer des conducteurs ou coller des fils des nappes de la partie active d'une tablette à fils, on peut facilement réaliser ces nappes sur des surfaces non planes.

De même, la partie active de la tablette à fils peut être réalisée sur un support déformable. Dans ce cas, le substrat non conducteur, transparent et perméable aux champs électromagnétiques doit être déformable. Les coefficients d'élasticité respectifs du substrat et du matériau des nappes de conducteurs doivent être choisis de manière que la déformation du substrat n'entraîne pas de cassure des conducteurs.

Dans l'exemple montré à la Fig. 2, le courant électrique passant dans les conducteurs 5 et 6 est un courant à très haute fréquence de l'ordre de 10 MHz. Dans la demande de brevet français 77 39395, il est décrit une tablette graphique dont les nappes sont parcourues par du courant à une fréquence de l'ordre d'une dizaine de mégahertz, la fréquence d'exploration des fils des nappes étant de l'ordre d'une centaine de kilohertz. Indépendamment des avantages déjà obtenus en utilisant cette tablette à courant haute fréquence, il a été constaté que, si on applique une telle tablette sur l'écran 7 d'un téléviseur qui reçoit les signaux recueillis par le crayon de la tablette, les perturbations mentionnées plus haut n'existent plus, c'est à dire que le spot lumineux de l'écran suit la position du crayon sur la tablette.

Sur la coupe de la Fig. 3, on retrouve le voile 4, portant ses nappes de conducteurs 5 et 6, placé contre l'avant de la paroi frontale 7 du tube du téléviseur. Entre le voile 4 et la surface de la paroi 7, est prévue une couche très mince 8 en matériau non magnétique qui peut être un métal ou un oxyde métallique conducteur comparable au matériau utilisé pour la réalisation des bandes conductrices, l'épaisseur du film 8 étant assez faible pour qu'il paraisse transparent. Le film 8, qui constitue une surface métallique continue est électriquement relié à la masse. Dans cette variante, on peut utiliser du courant à fréquence faible dans les nappes de la tablette. En effet, le film 8 constitue un écran découplant le courant de la tablette du faisceau d'électrons du tube.

Dans les exemples précédents, on a prévu entre les deux nappes de conducteurs 5 et 6, un voile 4. Toutefois, comme ce voile remplit deux fonctions, à savoir former un support matériel pour les nappes et les isoler, il apparaît que, si on utilise des fils émaillés, on peut se dispenser du voile comme support et utiliser directement la face avant du tube du téléviseur pour soutenir les fils. Les fils peuvent être rendus solidaires de la face du tube par collage avec de la colle transparente. Le positionnement des fils sur le tube peut être amélioré en prévoyant des sillons définissant latéralement leurs positions. Bien entendu, on peut prévoir sous les fils une couche conductrice, telle que 8, Fig. 3.

Dans les exemples précédents, on a utilisé comme dispositif d'affichage un écran de tube cathodique. Il doit être bien entendu que les tablettes graphiques transparentes à fils suivant l'invention peuvent également être appliquées sur d'autres dispositifs d'affichage.

Il faut bien entendu relier les extrémités des fils constituant les nappes aux sources de courant pour effectuer l'exploration de la surface d'écriture, par exemple comme il est décrit dans le brevet français 77 39395. Ainsi, on prévoit autour de la surface d'écriture de la tablette, un cadre en matière isolante dans lequel chaque extrémité de fil de nappe est reliée à un commutateur électronique monté sur le cadre, ou bien à une borne de connexion porté par le cadre. Les courants d'alimentation et de commande étant en grand nombre, il est avantageux, pour réduire le nombre des connexions, de prévoir des décodeurs d'adresse directement montés sur le cadre, à proximité des commutateurs.

La Fig. 4 montre une tablette munie d'un cadre 9 qui enserre le tube écran. Sur la tablette, les nappes de fils sont montées de

7 0034976

manière à corriger l'erreur de parallaxe due au tube. Chaque extrémité de fil est prolongée sur le cadre 9 jusqu'à un commutateur 10, qui dans l'exemple décrit peut satisfaire 70 connexions. Pour faciliter la réalisation, on peut prévoir plusieurs connecteurs, au lieu d'un seul.

REVENDICATIONS

1) Appareil de téléécriture et d'affichage sur surface commune se composant d'une tablette graphique (2) à nappes de fils et d'un dispositif d'affichage (1), notamment à tube cathodique, recevant les signaux transmis par la tablette graphique (2), les fils (5, 6) de la tablette étant parcourus par des courants alternatifs, la plaque (4) non conductrice de la tablette étant transparente et les nappes de fils (5, 6) perpendiculaires entre elles étant constituées de conducteurs électriques transparents ou de fils conducteurs fins, ce qui les rend pratiquement invisibles, la tablette (2) étant appliquée sur l'écran du dispositif d'affichage (1), caractérisé en ce qu'entre l'écran du tube cathodique et la face inférieure de la tablette graphique, est prévue une couche (8) transparente conductrice et non magnétique.

2) Appareil de téléécriture et d'affichage sur surface commune se composant d'une tablette graphique (2) à nappes de fils et d'un dispositif d'affichage (1), notamment à tube cathodique, recevant les signaux transmis par la tablette graphique (2), les fils (5, 6) de la tablette graphique étant parcourus par des courants alternatifs, la plaque (4) non conductrice de la tablette étant transparente et les nappes de fils (5, 6) perpendiculaires entre elles étant constituées de conducteurs électriques transparents ou de fils conducteurs fins, ce qui les rend pratiquement invisibles, la tablette (2) étant appliquée sur l'écran du dispositif d'affichage (1), caractérisé en ce que le courant électrique parcourant les nappes de fils (5, 6) est un courant à haute fréquence.

3) Appareil de téléécriture et d'affichage suivant la revendication 1, caractérisé en ce que le courant électrique parcourant les nappes de fils (5, 6) est un courant à haute fréquence.

4) Appareil de téléécriture et d'affichage suivant la revendication 2 ou 3, caractérisé en ce que la fréquence dudit courant électrique est de l'ordre de 10 MHz.

5) Appareil de téléécriture et d'affichage suivant l'une des revendications 1 à 4, caractérisé en ce que le stylet (3) de la tablette graphique (2) est une tige métallique gainée par un matériau isolant.

1,1
0034976

FIG.1

FIG.2

FIG.3

FIG.4

**RAPPORT DE RECHERCHE EUROPEENNE**

Office européen des brevets

| DOCUMENTS CONSIDERES COMME PERTINENTS | | | CLASSEMENT DE LA DEMANDE (Int. Cl.³) |
|---|---|---|---|
| Catégorie | Citation du document avec indication, en cas de besoin, des parties pertinentes | Revendication concernée | |
| D/A | US - A - 4 066 855 (ZENK)<br><br>* Colonne 1, ligne 38 à colonne 2, ligne 22 *<br><br>& FR - A - 2 371 761<br>--- | 1,2 | G 06 F 3/037 |
| D | FR - A - 2 412 997 (TELEDIFFUSION DE FRANCE)<br><br>* Page 2, lignes 2-16 *<br>--- | 2-4 | |
| | FR - A - 2 438 874 (OPTION S.A.)<br><br>* Page 2, lignes 9-33 *<br><br>--------- | 1,5 | **DOMAINES TECHNIQUES RECHERCHES (Int. Cl.³)**<br><br>G 06 F 3/037 |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 06.05.1981 | LACROIX |

OEB Form 1503.1  06.78